(19)

Europäisches
Patentamt
European
Patent Office
Office européen
des brevets

(11) **EP 4 276 117 A1**

(12) **EUROPEAN PATENT APPLICATION**

(43) Date of publication:
**15.11.2023 Bulletin 2023/46**

(21) Application number: **23171773.7**

(22) Date of filing: **05.05.2023**

(51) International Patent Classification (IPC):
**C08F 2/22** (2006.01)    **C08F 265/04** (2006.01)
**C08F 285/00** (2006.01)

(52) Cooperative Patent Classification (CPC):
(C-Sets available)
**C08F 265/06; C08F 2/22; C08F 285/00**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022 KR 20220058254**

(71) Applicant: **Hankuck Latices Co., Ltd.
Gumi-si, Gyeongsangbuk-do 39384 (KR)**

(72) Inventors:
• **KIM, Nam Woo
39841 Chilgok-gun, Gyeongsangbuk-do (KR)**

• **KIM, Ji Yun
42610 Dalseo-gu, Daegu (KR)**
• **CHAE, Min Ji
42622 Dalseo-gu, Daegu (KR)**
• **CHOI, Si On
39203 Gumi-si, Gyeongsangbuk-do (KR)**
• **KIM, Hyun Ji
41902 Jung-gu, Daegu (KR)**

(74) Representative: **Frenkel, Matthias Alexander
Wuesthoff & Wuesthoff
Patentanwälte PartG mbB
Schweigerstraße 2
81541 München (DE)**

(54) **METHOD FOR PREPARING FINE PARTICLES HAVING ENCLOSED VOIDS WITH IMPROVED STAIN RESISTANCE CONTAINING FUNCTIONAL PHOSPHORIC ACID MONOMER AND COMPOSITION COMPRISING THE PARTICLES**

(57)    An object of the present disclosure is to provide a method for preparing fine particles having enclosed voids with improved stain resistance and composition comprising the particles by preventing free radicals from interfering with core swelling due to the cross-linking monomer upon polymerization of a secondary hard-shell and by removing the residual initiator by additional polymerization of the phosphoric acid monomer and the hard-shell monomer.

EP 4 276 117 A1

(52) Cooperative Patent Classification (CPC): (Cont.)

C-Sets
**C08F 265/06, C08F 220/14, C08F 220/1804,**
**C08F 220/06, C08F 220/1806;**
**C08F 285/00, C08F 212/08, C08F 212/36,**
**C08F 230/02**

**Description**

**TECHNICAL FIELD**

The present disclosure relates to a method for preparing fine particles having enclosed voids with improved stain resistance containing functional phosphoric acid monomer and composition comprising the particles, which is mainly used as a hiding material in the manufacture of paints, inks, leather, textiles, flexographic printing and paper coatings.

**DISCUSSION OF RELATED ART**

The hiding material is used in the field of paint, in particular water-based white or light-colored paint, and is also used for gel-type ink, leather, textiles, flexographic printing, and a sizing agent or coating agent in paper manufacture.
Titanium dioxide ($TiO_2$), which is an inorganic pigment, has excellent hiding power and is therefore widely used as the pigment for the hiding material. However, as minerals containing titanium are gradually depleted, the price of titanium dioxide is increasing, and accordingly, the use of titanium dioxide as a hiding material acts as a factor in increasing the cost of paint or paper.
Such a problem has led to a lot of research to develop a pigment for a hiding material that can be used instead of titanium dioxide. As a result of the study, it was confirmed that fine particles made of organic polymers with pores inside cause light scattering effects due to the difference in refractive index between the hollow layer and the shell layer in the particles, and the hiding power are enhanced by the light scattering effect, suggesting that it can be used as a pigment for a hiding material.
In addition, fine particles made of organic polymers having internal voids, that is, hollow organic pigments, are also used in the paper industry. These hollow organic pigments are used to improve the smoothness, hiding power, gloss, and printing gloss of coated paper and to make the appearance of coated paper beautiful, and are particularly applied as a base coat when manufacturing thermal direct printing paper. Hollow organic pigment is an insulator with an enclosed void and has the advantage of increasing printing efficiency and improving the smoothness of thermal direct printing paper.
The synthesis of hollow organic pigments made of organic polymers used in place of these titanium dioxides is disclosed in US Patent No. 10,030,080 B2.
Hollow organic pigments prepared in this way have the advantage of improving hiding and gloss compared to inorganic pigments. However, when added to inorganic pigments, paints, or coatings and applied together with other additives, hollow organic pigments do not separate and adhere well, so they do not exhibit an improved function as a pigment.
Therefore, there is a need for a hollow organic pigment having improved stain resistance as a pigment compared to conventional inorganic or organic pigments as well as improving opacity and gloss.

**SUMMARY**

An object of the present disclosure is to provide a method for preparing fine particles having enclosed voids with improved stain resistance and composition comprising the particles by preventing free radicals from interfering with core swelling due to the cross-linking monomer upon polymerization of a secondary hard-shell and by removing the residual initiator by additional polymerization of the phosphoric acid monomer and the hard-shell monomer.
In order to achieve the above object, the method for preparing fine particles having enclosed voids with improved stain resistance containing functional phosphoric acid monomer of the present disclosure is a multi-staged emulsion polymerization method for preparing fine particles having enclosed voids using a core polymer containing carboxylic acid, a polymerization initiator, a primary middle shell monomer, and a secondary hard-shell monomer in which the primary middle shell monomer includes a multifunctional monomer that is a cross-linking monomer having two or more double bonds, and during the process of forming the secondary hard-shell, a functional monoethylenically unsaturated monomer having a phosphoric acid group and a secondary hard-shell monomer are added to the fine particles and polymerized to remove residual polymerization initiators.
The method comprises (a) preparing a primary middle shell polymer by adding a polymerization initiator and a primary middle shell monomer to a core polymer containing the carboxylic acid to encapsulate the core, followed by polymerization, (b) preparing fine particles having enclosed voids while neutralizing and swelling the encapsulated core by adding a secondary hard-shell monomer and a neutralizing swelling agent to the primary middle shell polymer, followed by polymerization, and (c) removing a residual polymerization initiator by further adding functional monoethylenically unsaturated monomer having a phosphoric acid group and a secondary hard-shell monomer to the fine particles, followed by polymerization.

The primary middle shell monomer includes a non-ionic monoethylenically unsaturated monomer, a monoethylenically unsaturated monomer having 1 to 2 carboxyl groups, and a multifunctional monomer that is a crosslinking monomer having two or more double bonds.

In step (a), the primary middle shell polymer is prepared step by step through the first polymerization and the second polymerization in which the primary middle shell monomer introduced during the first polymerization has a higher content of monoethylenically unsaturated monomers having 1 to 2 carboxyl groups and a lower content of non-ionic monoethylenically unsaturated monomer than the primary middle shell monomer introduced during the second polymerization,

The non-ionic monoethylenically unsaturated monomer includes at least one selected from the group consisting of styrene, a-methyl styrene, p-methyl styrene, t-butyl styrene, vinyl toluene, ethylene, vinyl acetate, vinyl chloride, vinylidene chloride, (meth)acrylonitrile, (meth)acrylamide, (C1-C20) alkyl or (C3-C20) alkenyl esters of (meth)acrylic acid, methyl(meth)acrylate, ethyl(meth)acrylate, butyl(meth)acrylate, 2-ethylhexyl(meth)acrylate, hydroxyl ethyl(meth)acrylate, hydroxypropyl(meth)acrylate, benzyl (meth)acrylate, lauryl(meth)acrylate, oleyl(meth)acrylate, palmityl(meth)acrylate, and stearyl(meth)acrylate.

The monoethylenically unsaturated monomers having 1 to 2 carboxyl groups include at least one selected from the group consisting of acrylic acid, methacrylic acid, acryloxy propionic acid, (meth)acryloxy propionic acid, itaconic acid, aconitic acid, maleic acid or anhydride, fumaric acid, crotonic acid, monomethyl maleate, monomethyl fumarate, and mono methyl itaconate.

The multifunctional monomer that is a crosslinking monomer having two or more double bonds includes at least one selected from the group consisting of alkylene glycol diacrylates and dimethacrylates, ethylene glycol diacrylate, ethylene glycol dimethacrylate, 1,3-butylene glycol diacrylate, 1,4-butylene glycol diacrylate, propylene glycol diacrylate, triethylene glycol dimethyl acrylate, 1,3-glycerol dimethacrylate, 1,1,1-trimethylol propane dimethacrylate, 1,1,1-trimethylol ethane diacrylate, pentaerythritol trimethacrylate, 1,2,6-hexane triacrylate, sorbitol pentamethacrylate, methylene bis-acrylamide, methylene bis-methacrylamide, divinyl benzene, vinyl methacrylate, vinyl crotonate, vinyl acrylate, vinyl acetylene, trivinylbenzene, triallyl cyanurate, divinyl acetylene, divinyl ethane, divinyl disulfide, divinyl ether, divinyl sulfone, diallyl cyanamide, ethylene glycol divinyl ether, diallyl phthalate, divinyl dimethyl silane, glycerol trivinyl ether, divinyl adipate, dicyclopentenyl(meth)acrylates, dicyclopentenyloxy(meth)acrylates, unsaturated esters of glycol monodicyclopentenylethers, allyl esters of fatty acids, 3-unsaturated mono- and dicarboxylic acids having terminal ethylenic unsaturation including allyl methacrylate, allyl acrylate, diallyl maleate, diallyl fumarate, and diallyl itaconate.

The neutralizing swelling agent includes at least one selected from the group consisting of a volatile base, a volatile lower amino amine, and a fixed or permanent base. The volatile base includes at least one selected from the group consisting of ammonia and ammonium hydroxide. The volatile lower amino amine includes at least one selected from the group consisting of morpholine, trimethylamine, and trimethylamine, 2-amino-2-methyl-1-propanol. The fixed or permanent base (non-volatile base) includes at least one selected from the group consisting of potassium hydroxide, lithium hydroxide, zinc ammonium complex, copper ammonium complex, silver ammonium complex, strontium hydroxide, and barium hydroxide.

The functional monoethylenically unsaturated monomer having a phosphoric acid group includes at least one selected from the group consisting of vinylphosphonic acid, dimethyl vinylphosphonate, diethyl vinylphosphonate, diethyl allylphosphonate, dimethyl allylphosphonate, ethylene glycol methacrylate phosphate, phosphoric acid 2-hydroxyethyl methacrylate ester, bis[2-(methacryloyloxy)ethyl phosphate, 11-phosphonoundecyl acrylate, and 12-mercaptododecylphosphonic acid

The composition of the present disclosure is prepared by the method.

The composition is for water-based paints, inks, leathers, textiles, flexographic printing, or paper coating.

The fine particles having enclosed void prepared by the present disclosure have the advantage of having excellent stain resistance, minimizing the reversal of the hydrophilic core and hydrophobic shell and the generation of defective particles by adjusting the ratio of monoethylenically unsaturated monomers having different compositions including the crosslinking agent during the polymerization of the primary middle shell polymer, preventing the destruction of the shell film due to swelling, and increasing the monodisperse efficiency. Further, the fine particles have the advantage of adding the functional monomer containing a phosphoric acid group and the hard-shell monomer to react to all the remaining polymerization initiators at the end of the reaction to prevent the subsequent polymerization and improve adsorption between the surface of the particles and latex, thereby increasing adhesion and stain resistance to enhance dirt resistance and making the shape of the particle more even.

## BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:

FIG. 1 is an FE-SEM picture according to a first embodiment of the present disclosure;

FIG. 2 is an FE-SEM picture according to a second embodiment of the present disclosure;

FIG. 3 is an FE-SEM picture according to a third embodiment of the present disclosure;

FIG. 4 is an FE-SEM picture according to a first comparative example;

FIG. 5 is an FE-SEM picture according to a second comparative example;

FIG. 6 is an FE-SEM picture according to a third comparative example;

FIG. 7 is an FE-SEM picture according to a fourth comparative example; and

FIG. 8 is an FE-SEM picture according to a fifth comparative example.

## DETAILED DESCRIPTION OF EXEMPLARY EMBODIMENTS

Hereinafter, the present disclosure is described in detail.

The present disclosure relates to a method for preparing fine particles having enclosed voids that can be usefully used as an opacifier, that is, a hiding agent, in paints, inks, leathers, textiles, flexographic printing, paper coating materials, and molding compositions.

In particular, the present disclosure relates to a method for preparing multilayer polymeric fine particles having enclosed voids with excellent stain resistance, wherein the fine particles include a core composed of an alkali swellable polymer and at least one crosslinking primary middle shell formed on top of the core, and a secondary hard-shell with multi-layered functionality.

In particular, the present disclosure relates to a multi-staged emulsion polymerization method for preparing fine particles having enclosed voids using a core polymer containing carboxylic acid, a polymerization initiator, a primary middle shell monomer, and a secondary hard-shell monomer in which the primary middle shell monomer includes a multifunctional monomer that is a cross-linking monomer having two or more double bonds, and during the process of forming the secondary hard-shell, a functional monoethylenically unsaturated monomer having a phosphoric acid group and a secondary hard-shell monomer are added to the fine particles and polymerized to remove residual polymerization initiators.

That is, the fine particles of the present disclosure include a multifunctional monomer, which is a crosslinking monomer having two or more double bonds, as a primary middle shell monomer, thereby minimizing the occurrence of a reversal phenomenon between the hydrophilic core and the hydrophobic shell and preventing breakage of the shell due to swelling and remove the residual polymerization initiator by further adding and polymerizing a functional monoethylenically unsaturated monomer having a phosphoric acid group and a secondary hard-shell monomer to the fine particles during the process of forming the secondary hard-shell to suppress side reactions that may occur later and enhance stain resistance, thereby improving dirt resistance.

More specifically, the method comprises (a) preparing a primary middle shell polymer by adding and polymerizing a polymerization initiator and a primary middle shell monomer to a core polymer containing the carboxylic acid to encapsulate the core, (b) preparing fine particles having enclosed voids while neutralizing and swelling the encapsulated core by adding and polymerizing a secondary hard-shell monomer and a neutralizing swelling agent to the primary middle shell polymer, and (c) removing a residual polymerization initiator by additionally adding and polymerizing functional monoethylenically unsaturated monomer having a phosphoric acid group and a secondary hard-shell monomer to the fine particles.

Hereinafter, the present disclosure is described in detail.

The very first step of the present disclosure is to prepare a core polymer containing carboxylic acid. The core polymer is prepared by a conventionally published method and is the same as the examples mentioned in the expired patent owned by Rohm and Haas Company.

That is, the core polymer is a product obtained by performing water emulsion polymerization on one or more monoethylenically unsaturated monomers containing a - HC=C< group. Here, the monomers include 5 % by weight to 70 % by weight of hydrophilic monomers having a carboxylic acid group or anhydroxyl group and 30 % by weight to 95 % by weight of non-ionic monoethylenically unsaturated monomers not including carboxylic acid functionality.

As the non-ionic monoethylenically unsaturated monomers, styrene, a-methyl styrene, p-methyl styrene, t-butyl styrene, vinyltoluene, ethylene, vinyl acetate, vinyl chloride, vinylidene chloride, (meth)acrylonitrile, (meth)acrylamide, (C1-C20) alkyl or (C3-C20) alkenyl esters of (meth)acrylic acid, such as methyl(meth)acrylate, ethyl(meth)acrylate, butyl(meth)acrylate, 2-ethylhexyl(meth)acrylate, hydroxyl ethyl(meth)acrylate, hydroxypropyl(meth)acrylate, benzyl (meth)acrylate, lauryl(meth)acrylate, oleyl(meth)acrylate, palmityl(meth)acrylate, stearyl(meth)acrylate, or other various types of (C1-C2)alkyl or (C3-C20)alkenyl ester of (metha)acrylic acid may be used.

As the monomers including a carboxylic acid group or anhydroxyl group, acrylic acid, methacrylic acid, acryloxy propionic acid, (meth)acryloxy propionic acid, itaconic acid, aconitic acid, maleic acid or anhydride, fumaric acid, crotonic acid, monomethyl maleate, monomethyl fumarate, or mono methyl itaconate may be used.

5 % by weight to 70 % by weight of monomers having carboxylic acid functionality or anhydroxyl group may be sufficient to prepare the care polymer. Preferably, 10 % by weight to 50 % by weight of the monomers may be included.

As described above, since the method for preparing the hydrophilic core having a carboxyl group, that is, the core polymer is a known technology, it is apparent that it can be prepared through various methods previously disclosed. Further, it should be noted once again that the final purpose of the present disclosure is to create voids by neutralizing and swelling it using volatile or non-volatile bases and to allow encapsulation by neutralizing the hydrophobic monomer, which is the outer shell of the swelling core through the multi-step emulsion polymerization.

The second step of the present disclosure is to prepare a primary middle shell polymer by adding and polymerizing a polymerization initiator and a primary middle shell monomer to a core polymer containing the carboxylic acid to encapsulate the core.

As described above, the final purpose is to polymerize a hydrophobic monomer, that is, a secondary hard-shell monomer, to a hydrophilic core. However, direct polymerization of the secondary hard-shell monomer on the hydrophilic core has various manufacturing difficulties. Therefore, this issue can be addressed by first polymerizing the primary middle shell polymer using monomers having low hydrophobicity.

That is, a polymerization initiator and a primary intermediate shell monomer are added to the core polymer containing the carboxylic acid, followed by polymerization so that the core polymer is encapsulated by the primary middle shell polymer. The primary middle shell polymer is more hydrophobic than the carboxylic acid-containing core polymer but more hydrophilic than the secondary hard-shell polymer.

It is preferable to use the primary middle shell monomer including a non-ionic monoethylenically unsaturated monomer, a monoethylenically unsaturated monomer having 1 to 2 carboxyl groups, and a multifunctional monomer that is a crosslinking monomer having two or more double bonds.

The multifunctional monomer that is a crosslinking monomer having two or more double bonds includes at least one selected from the group consisting of alkylene glycol diacrylates and dimethacrylates, ethylene glycol diacrylate, ethylene glycol dimethacrylate, 1,3-butylene glycol diacrylate, 1,4-butylene glycol diacrylate, propylene glycol diacrylate, triethylene glycol dimethyl acrylate, 1,3-glycerol dimethacrylate, 1,1,1-trimethylol propane dimethacrylate, 1,1,1-trimethylol ethane diacrylate, pentaerythritol trimethacrylate, 1,2,6-hexane triacrylate, sorbitol pentamethacrylate, methylene bis-acrylamide, methylene bis-methacrylamide, divinyl benzene, vinyl methacrylate, vinyl crotonate, vinyl acrylate, vinyl acetylene, trivinylbenzene, triallyl cyanurate, divinyl acetylene, divinyl ethane, divinyl disulfide, divinyl ether, divinyl sulfone, diallyl cyanamide, ethylene glycol divinyl ether, diallyl phthalate, divinyl dimethyl silane, glycerol trivinyl ether, divinyl adipate, dicyclopentenyl(meth)acrylates, dicyclopentenyloxy(meth)acrylates, unsaturated esters of glycol monodicyclopentenylethers, allyl esters of fatty acids, 3-unsaturated mono- and dicarboxylic acids having terminal ethylenic unsaturation including allyl methacrylate, allyl acrylate, diallyl maleate, diallyl fumarate, and diallyl itaconate. The crosslinking monomer is used in an amount of 0.1% by weight to 30% by weight, more preferably 5% by weight to 15% by weight, based on 100% by weight of the primary middle shell monomer.

The reason for using the multifunctional monomer that is the crosslinking monomer, in the present disclosure is that the core can be neutralized and swollen after polymerization of the primary middle shell monomer with low hydrophobicity or polymerization of the secondary hard-shell monomer with hydrophobicity, but the primary middle shell or the secondary hard-shell is often destroyed by neutralization and swelling. Conventionally, in order to solve this problem, a method for preparing emulsion-neutralized particles capable of improving the degree of swelling of the particles has been proposed by discovering that free radicals interfere with swelling during the polymerization of the secondary hard-shell, adding one or more inhibitors to stop all polymerization to terminate polymerization, and then adding a swelling agent. However, the present disclosure includes a multifunctional crosslinking monomer that is a crosslinking monomer having two or more double bonds, as a primary middle shell monomer having low hydrophobicity, thereby controlling the particle size during alkali swelling and preventing particle destruction.

The non-ionic monoethylenically unsaturated monomer may include at least one selected from the group consisting of styrene, a-methyl styrene, p-methyl styrene, t-butyl styrene, vinyl toluene, ethylene, vinyl acetate, vinyl chloride, vinylidene chloride, (meth)acrylonitrile, (meth)acrylamide, (C1-C20) alkyl or (C3-C20) alkenyl esters of (meth)acrylic acid, methyl(meth)acrylate, ethyl(meth)acrylate, butyl(meth)acrylate, 2-ethylhexyl(meth)acrylate, hydroxyl ethyl(meth)acrylate, hydroxypropyl(meth)acrylate, benzyl (meth)acrylate, lauryl(meth)acrylate, oleyl(meth)acrylate, palmityl(meth)acrylate, and stearyl(meth)acrylate. The non-ionic monoethylenically unsaturated monomer is used in an amount of 55% by weight to 98.9% by weight based on 100% by weight of the primary middle shell monomer.

The monoethylenically unsaturated monomer having 1 to 2 carboxyl groups may include at least one selected from the group consisting of acrylic acid, methacrylic acid, acryloxy propionic acid, (meth)acryloxy propionic acid, itaconic acid, aconitic acid, maleic acid or anhydride, fumaric acid, crotonic acid, monomethyl maleate, monomethyl fumarate, and mono methyl itaconate. The monoethylenically unsaturated monomer having 1 to 2 carboxyl groups is used in an amount of 1% by weight to 15% by weight based on 100% by weight of the primary middle shell monomer.

The reason for including the monoethylenically unsaturated monomer having 1 to 2 carboxyl groups as the primary middle shell monomer in the present disclosure is as follows. Since the primary middle shell is generally designed so that volatile and non-volatile bases added to swelling of the core after shell polymerization pass through the core polymer, it contains a hydrophilic monomer.

In step (a), the primary middle shell polymer may be formed from the core polymer containing the carboxylic acid all at once. More preferably, it may be formed not all at once, by dividing in two steps, that is, separating and forming in two steps so that the primary middle shell polymer is made step by step from hydrophilic to hydrophobic, thereby flexibly forming a secondary hard-shell polymer having hydrophobicity.

Specifically, a polymerization initiator and a primary middle shell monomer are firstly added to the core polymer containing the carboxylic acid to form a primary middle shell, and the primary middle shell monomer is secondarily added to form a second middle shell.

The primary middle shell monomer introduced during the formation of the primary middle shell and the second middle shell is composed of 55% by weigh to 98.9% by weight of a non-ionic monoethylenically unsaturated monomer and 1% by weigh to 15% by weigh of a monoethylenically unsaturated monomer having 1 to 2 carboxyl groups, and 0.1% by weight to 30% by weight of a polyfunctional monomer that is a crosslinking monomer having two or more double bonds. However, preferably, the primary middle shell monomer introduced during the first polymerization has a higher content of monoethylenically unsaturated monomers having 1 to 2 carboxyl groups and a lower content of non-ionic monoethylenically unsaturated monomer than the primary middle shell monomer introduced during the second polymerization. That is, a ratio is adjusted within the above mixing ratio. Through this ratio adjustment, the primary middle shell polymer is synthesized from hydrophilic to hydrophobic step by step to allow the secondary hydrophobic hard-shell polymerization reaction to be slightly more flexible, thereby minimizing the shape destruction of particles during neutralization swelling.

The method of polymerizing the primary intermediate shell having low hydrophobicity to the core polymer containing carboxylic acid may be carried out in the same reaction vessel in which the core is formed, or another reaction vessel to which reaction medium containing the dispersed core particles may be transferred, but the implementation is not limited thereto.

The third step of the present disclosure comprises preparing fine particles having enclosed voids while neutralizing and swelling the encapsulated core by adding a secondary hard-shell monomer and a neutralizing swelling agent to the encapsulated core by the primary middle shell polymer, followed by polymerization.

Since the secondary hard-shell monomer is also used in the next step, step (c), it is polymerized by adding only a portion of it, not the entire amount, and the rest is used in step (c).

As a feature of the present disclosure, neutralization and swelling of the core polymer and polymerization of the hard-shell are performed simultaneously. For convenience of description, the process of neutralization and swelling of the core polymer is described first.

When particles encapsulated with the primary intermediate shell polymer are formed, the particles are neutralized and swelled by a neutralizing swelling agent that neutralizes the core by passing through the shell.

At this time, the core-first intermediate shell particles are swollen by absorbing water from the surrounding medium. This is because a monomer having a carboxyl group in the molecule of the first intermediate shell polymer is used during the polymerization of the first intermediate shell, so hydrophilicity is increased by the carboxyl group, assisting the neutralizing swelling agent and water to be easily diffused into the core.

The neutralizing swelling agent include at least one of a volatile base comprising at least one of ammonia and ammonium hydroxide, a volatile lower aliphatic amine comprising at least one of morpholine, trimethylamine, and triethylamine, potassium hydroxide, lithium hydroxide, zinc ammonium complex, copper ammonium complex, silver, and a fixed or permanent base consisting of one or more of ammonium complex, strontium hydroxide, and barium hydroxide. Here, the fixed or permanent base collectively refers to a non-volatile base. The most preferred base is one of ammonia, potassium hydroxide, and sodium hydroxide.

When an inorganic base is used as the neutralization swelling agent, a larger amount of the monomer containing carboxyl group should be included than when a volatile base is used. Therefore, the amount of the monomer containing carboxyl group is controlled in the primary middle shell monomer according to the type of the neutralizing swelling agent.

If the glass transition temperature (Tg) of the core or shell is higher than the standard room temperature, for effective swelling, it may be necessary to heat the core-shell polymers above their Tg or add a solvent to soften the polymer bodies. The expected size or uniformity of the particles to be swollen by neutralization can be controlled by the Tg of the primary middle shell, the carboxylic acid content, the temperature during neutralization, the neutralization time, and the concentration of the crosslinking monomer.

Meanwhile, the polymerization of the secondary hard-shell proceeds using a secondary hard-shell monomer containing styrene as a main component.

The secondary hard-shell monomer is a hydrophobic monomer having a double bond (with a high polymer Tg), and styrene is generally used. In addition to the above styrene, it is also possible to use a-methyl styrene, p-methyl styrene, t-butyl styrene, vinyltoluene, ethylene, vinyl acetate, vinyl chloride, vinylidene chloride, (meth)acrylonitrile, (meth)acrylamide, (C1-C20) alkyl or (C3 -C20) alkenyl esters of (meth)acrylic acid, such as methyl(meth)acrylate, ethyl(meth)acrylate, butyl(meth)acrylate, 2-ethylhexyl(meth)acrylate, hydroxyl ethyl(meth)acrylate, hydroxypropyl(meth)acrylate, benzyl (meth)acrylate, lauryl(meth)acrylate, oleyl(meth)acrylate, palmityl(meth)acrylate, or stearyl(meth)acrylate. Further, monomers having two or more double bonds can also be used to increase the strength of the secondary hard-shell. Examples include ethylene glycol di (meth) acrylate, allyl (meth)acrylate, 1,3-butanediol di (meth) acrylate, 1,6-hexanediol di(metha) acrylate, diethylene glycol di (meth) acrylate, trimethylolpropane trimethacrylate, and divinylbenzene.

As the secondary hard-shell monomer, generally inexpensive styrene monomer is used in an amount of 50% by weight to 100% by weight, preferably 90% by weight to 100% by weight, and a monomer having a double bond is used in an amount of 0% by weight to 10% by weight. This is because, when the monomer having the double bond is used in an amount of 10% by weight or more, there is a problem in that a large number of defective particles that do not form hollows are generated.

The present disclosure characteristically includes a crosslinking monomer having two or more double bonds. The primary intermediate shell monomer having a different ratio of a monoethylenically unsaturated monomer having 1 to 2 carboxyl groups and a non-ionic monoethylenically unsaturated monomer is used to separate and synthesize the primary middle shell polymer in two steps to create an encapsulated core from hydrophilic to hydrophobic, thereby making the second hard-shell synthesis more flexible. After the polymerization of the primary middle shell is completed, polymerization of the hydrophobic secondary hard-shell and neutralization for swelling of the core are simultaneously performed. Most preferably, neutralization and swelling also proceed while the secondary hard-shell polymerization process proceeds by 5% to 100%.

The last step of the present disclosure comprises removing a residual polymerization initiator by further adding functional monoethylenically unsaturated monomer having a phosphoric acid group and a secondary hard-shell monomer to the fine particles, followed by polymerization, thereby preparing fine particles with enclosed voids having improved stain resistance.

At this time, for the secondary hard-shell monomer, the remainder after use in step (b) is used. That is, a portion of the total secondary hard-shell monomers to be used in the present disclosure, preferably 5% by weight to 99% by weight, is added in step (b), followed by polymerization. In the final step (c), the secondary hard-shell polymer is finally polymerized by adding only the remainder of the secondary hard-shell monomer and a functional monoethylenically unsaturated monomer having a phosphoric acid group without adding a neutralization swelling agent, thereby preparing fine particles with enclosed voids having improved stain resistance.

At this time, the additionally introduced secondary hard-shell monomer reacts with the remaining initiator to harden the surface of the fine particles having neutralized and swollen enclosed voids and to eliminate the residual initiator, thereby minimizing side reactions that will occur later or synthesis of defective particles. This reaction is a step of additional synthesis on the already neutralized swollen particle surface.

Therefore, even if a functional monoethylenically unsaturated monomer having a phosphoric acid group is added together with the secondary hard-shell monomer, it does not significantly affect the synthesis itself, and the inclusion of a functional monomer containing a phosphoric acid group on the surface significantly increases the original stain resistance.

If neutralization is performed immediately after polymerization of the primary middle shell polymer having low hydrophobicity, deformation and destruction of the primary middle shell polymer may be occurred due to a sudden increase in volume of particles by neutralization and swelling of the core. However, the present disclosure neutralizes the secondary hard-shell polymer simultaneously with polymerization, thereby preventing particle destruction due to sudden swelling of the core particle and obtaining a uniform and well-encapsulated product. This is because unreacted monomers contribute to swelling of the primary intermediate shell and secondary hard-shell polymer during polymerization of the secondary hard-shell.

In the present disclosure, successive steps or individual steps of emulsion polymerization may be performed to form the secondary hard-shell polymer. This may be carried out in the same reaction vessel in which the formation of the core was carried out, or another reaction vessel to which reaction medium containing the dispersed core-primary middle shell particles may be transferred.

Further, during emulsion polymerization of the hydrophilic core, the primary intermediate shell, and the secondary hard-shell of the present disclosure, anionic emulsifiers and non-ionic emulsifiers may be used alone or in combination of two or more.

Sodium lauryl sulfate, sodium dodecylbenzene sulfonate, potassium stearate, sodium dioctyl sulfosuccinate, sodium dodecyldiphenyloxide disulfonate, nonylphenoxyethylpoly(10)ethoxyethyl sulfate ammonium salt, sodium styrene sulfonate, sodium dodecyl allyl sulfosuccinate, sodium or ammonium salts of phosphate esters of ethoxylated nonylphenol, sodium octoxynol-3-sulfonate, sodium cocoyl sarcosinate, sodium 1-alkyloxy-2-hydroxypropyl sulfonate, sodium alpha-olefin (C-C) sulfonate, sulfates of hydroxyalkanols, tetrasodium N-(1,2-dicarboxy ethyl)-N-octadecylsulfosuccinamate, disodium N-octadecyl sulfosuccinamate, disodium alkylamido polyethoxy sulfosuccinate, and disodium ethoxylated nonylphenol half ester of sulfosuccinic acid, known as an anionic emulsifier, may be used alone or in combination of two or more.

Tert-octylphenoxyethylpoly(39)ethoxyethanol, dodecyl oxypoly(10)ethoxyethanol, nonylphenoxyethylpoly(90)ethoxyethanol, polyethylene glycol 2000 monooleate, ethoxylated castor oil, polyoxyethylene (20) sorbitan monolaurate, sucrose monococoate, di(2-butyl)phenoxypoly(20) ethoxyethanol, hydroxyethylcellulose-polybutyl acrylate graft copolymer, dimethyl silicone polyalkylene oxide graft copolymer, polyethylene oxide)-poly(butyl acrylate) block copolymer, block copolymers of propylene oxide and ethylene oxide, 2,4,7,9-tetramethyl-5-decyne-4,7-diol ethoxylated with 30 moles of ethylene oxide, N-polyoxyethylene(20)lauramide, N-lauryl-N-polyoxyethylene(30)amine, and poly(10)ethylene glycol dodecyl thioether known as a nonanionic emulsifier, may be used alone or in combination of two or more.

The emulsifier is used according to a known technique, and the amount used is according to a known multi-step emulsion polymerization method.

Further, the polymerization initiator used in the present disclosure is also conventionally generally used, and examples thereof include organic hydroperoxies represented by cumene hydroperoxide and tert-butyl peroxide. Further, there can be mentioned, for example, redox system-based initiators which are a combination of reducing agents, typified by saccharated pyrophosphoric acid formulation, sulfoxylate formulation, mixed formulation of saccharated pyrophosphoric acid formulation and sulfoxylate formulation, and formaldehyde resin formulation. Specific examples of the redox system-based initiator include organic hydroperoxides such as sodium, potassium, lithium or ammonium persulfate. Among these, the most preferred polymerization initiators are persulfates such as potassium and ammonium persulfate, and benzoylperoxide, in consideration of particle stability and particle size uniformity. Further, the amount of the polymerization initiator used is according to a conventionally known multi-stage emulsion polymerization method.

The amount of primary intermediate shell monomer, secondary hard-shell monomer and neutralization swelling agent used in the present disclosure is also according to a conventionally known multi-step emulsion polymerization method. When adding the primary intermediate shell monomers in two steps, a weight ratio of 1:0.5 to 2 is sufFicient.

Further, the functional monoethylenically unsaturated monomer having a phosphoric acid group used in the final step may be 0.5% by weight to 5% by weight of the total amount of the secondary hard-shell monomer. This amount is for improving the stain resistance without inhibiting the synthesis of the hard-shell.

Hereinafter, the present disclosure is described in detail through specific embodiments.

**First Embodiment**

**Synthesis of Core**

A 2 l, 4-neck round bottom flask was mounted with paddle stirrer, a thermometer, a nitrogen influx spherical, and a reflux condenser. 1156.0 g of deionized water was put in a container and was then heated in a nitrogen atmosphere at 80 °C. A seed monomer solution (e.g., seed pre-emulsion solution) was prepared that consists of 227.8g of deionized water (also simply referred herein to as DW), 2.8 g of sodium dodecylbenzenesulfonate surfactant (also simply referred herein to as SDBS) (23%), 42.8g of methyl methacrylate (also simply referred herein to as MMA), and 3.0g of methacrylic acid (also simply referred herein to as MAA) and was then put in the heated flask. A swellable core monomer pre-emulsion solution was prepared using 10.2 g of SDBS (23%), 204.9 g of MMA, and 163.9 g of MAA. 1.9 g of sodium persulfate (also simply referred herein to as SPS) was dissolved in 10.2 g of deionized water, and the resultant solution of the SPS and the deionized water was put in the heated flask and was slightly heated. Then, the temperature was maintained at 80 °C for 20 minutes to form seed particles. The remaining monomer emulsion was gradually added over about two hours. After completing the addition of the monomer emulsion, the polymer dispersion was left at 85 °C for 30 minutes and was then cooled down to room temperature and filtered to remove the coagulation. The result dispersion exhibited a solid content of 23.01% and a particle diameter of 330 nm.

**Synthesis of Primary Middle Shell Polymer**

A 2 l, 4-neck round bottom flask was mounted with paddle stirrer, a thermometer, a nitrogen influx spherical, and a reflux condenser. 960g of DW was put in a container and was then heated in a nitrogen atmosphere at 80 °C. A solution in which 0.8g of SPS was dissolved in 125g of DW and a solution including 125g of the alkali swellable core (the dispersion where the coagulation has been removed) previously prepared and 20g of deionized water were put in the heated flask. A primary-first middle shell monomer emulsion was prepared by including 40g of DW, 3.9g of SDBS (23%), 35g of n-butylmethacrylate (also simply referred herein to as n-BMA), 50g of MMA, 10g of butylacrylate (also simply referred herein to as BA), 15.0g of MMA, and 2g of arylmethacrylate (also simply referred herein to as ALMA). A solution in which 0.6g of SPS is dissolved in 60g of deionized water and the primary-first middle shell monomer emulsion were simultaneously added gradually over 40 minutes. Here, the primary-second middle shell monomer emulsion consisting of 60g of DW, 5g of SDBS, 147g of styrene (also simply referred herein to as SM), 30g of BA, 10g of MAA, 2g of ALMA, and 1g of divinylbenzene (also simply referred herein to as DVB) was added to the primary-first middle shell monomer. The resultant was added over one hour and maintained for 60 minutes to prepare the primary middle shell.

**Synthesis of secondary middle shell polymer**

After the primary middle shell was prepared as described above, a pre-emulsion solution obtained by emulsifying 40g of ammonia water with a purity of 6.5 % by weight, 40g of DW, 4.6g of SDBS, 180g of SM, 1g of DVB was put into the primary middle shell heated to 88 °C for 60 minutes, followed by neutralization and synthesis at the same time, and was then left at 80 °C for 10 minutes. A solution in which 1g of potassium persulfate (also simply referred herein to as KPS) was dissolved in 30g of DW and was cooled down to 80 °C and left for 30 minutes. A pre-emulsion solution obtained by emulsifying 25g of deionized water, 1g of SDBS, 48 g of SM, and 3 g of ethylene glycol methacrylate phosphate (also simply referred herein to as EGMAP) was added thereto to perform synthesis of the remaining hard-shell and was left for 60 minutes, thereby preparing a secondary hard-shell and then cooled down to 50 °C. or less, filtered with 400mesh filter, and packed. The synthesized final emulsion polymer exhibited a solid content of 28.7% and a particle diameter of 960 nm.

**Second Embodiment**

Emulsion polymerization was performed by the same method as that described above in connection with the first embodiment, except that ALMA used in synthesizing the primary middle shell polymer was replaced with 1,4 butanediol diacrylate. The synthesized final emulsion polymer exhibited a solid content of 28.7% and a particle diameter of 946 nm.

**Third Embodiment**

Emulsion polymerization was performed by the same method as that described above in connection with the first embodiment, except that 3.0g of EGMAP, a phosphoric acid-based functional monomer used in the synthesis of the secondary hard-shell polymer, was changed to 3.0g of diethyl allylphosphonate. The synthesized final emulsion polymer exhibited a solid content of 28.5% and a particle diameter of 892 nm.

**First Comparative Example**

Emulsion polymerization was performed by the same method as that described above in connection with the first embodiment, except for EGMAP, which is used after adding and maintaining the polymerization initiator in the synthesis of the secondary hard-shell polymer. The synthesized final emulsion polymer exhibited a solid content of 28.7% and a particle diameter of 957 nm.

**Second Comparative Example**

Emulsion polymerization was performed by the same method as that described above in connection with the first embodiment, except that ALMA used in synthesizing the primary middle shell polymer was excluded. The synthesized final emulsion polymer exhibited a solid content of 28.5% and a particle diameter of 846 nm. Non-uniform small particles adhered to the side.

**Third Comparative Example**

Emulsion polymerization was performed by the same method as that described above in connection with the first embodiment, except that the ratios of MAA used in the synthesis of primary-first and primary-second middle shell polymers were exchanged with each other and synthesized. The synthesized final emulsion polymer exhibited a solid content of 28.6% and a particle diameter of 897 nm. Non-uniform small particles adhered to the side.

**Fourth Comparative Example**

A 2 l, 4-neck round bottom flask was mounted with paddle stirrer, a thermometer, a nitrogen influx spherical, and a reflux condenser. 960 g of DW was put in a container and was then heated in a nitrogen atmosphere at 80 °C. A solution in which 0.8g of SPS was dissolved in 20g of DW and a solution including 125g of an alkali swellable core (dispersion where the coagulation has been removed) as prepared by the same method described above in connection with the first embodiment and 20g of DW was added to the heated flask. A primary middle shell monomer emulsion was prepared consisting of 100g of DW, 8.9g of SDBS (23%), 147g of SM, 35g of n-BMA, 50g of MMA, 40g of BA, 25.0g of MAA, 4g of ALMA, and 1g of DVB. A solution in which 0.6g of SPS was dissolved in 60g of DW and the primary middle shell monomer emulsion were simultaneously added gradually over 1 hour 30 minutes and left for 60 minutes, thereby preparing a primary middle shell monomer emulsion. Pre-emulsion obtained by emulsifying 40g of A.N with a purity of 6.5 wt%, 40g of DW, 4.6g of SDBS, 180g of SM, and 1g of DVB was added to the primary middle shell polymer heated to 88 ° C for 60 minutes, followed by neutralization and synthesis simultaneously. After that, it was maintained at a temperature of 88 °C for 10 minutes. A solution of 1g of KPS dissolved in 30g of DW was added thereto. The result was cooled down to 80 °C, and was maintained for 30 minutes, Thereafter, pre-emulsion obtained by emulsifying 25g of deionized water, 1g of SDBS, 48g of SM, and 3g of EGMAP was added for 30 minutes to proceed with the rest of the hard-shell synthesis, maintained for 60 minutes to prepare a secondary hard-shell, cooled to 50 ° C or less, filtered with a 400 mesh filter, and packed. The synthesized final emulsion polymer exhibited a solid content of 28.4% and a particle diameter of 868 nm. Non-uniform small particles adhered to the side.

**Fifth Comparative Example**

A 2 l, 4-neck round bottom flask was mounted with paddle stirrer, a thermometer, a nitrogen influx spherical, and a reflux condenser. 960g of DW was put in a container and was then heated in a nitrogen atmosphere at 80 °C. A solution in which 0.8g of SPS was dissolved in 20g of DW and a solution including 125g of an alkali swellable core dispersion (dispersion where the coagulation has been removed) as prepared above and 20g of CW was added to the heated flask. A primary-first middle shell monomer emulsion was prepared consisting of 40g of DW, 3.9g of SDBS (23%), 35g of n-BMA, 50g of MMA, 10g of BA, 15g of MAA, and 2g of ALMA. A solution in which 0.6g of SPS was dissolved in 60g of deionized water and the primary-first middle shell monomer emulsion were simultaneously added gradually over 40 minutes. The primary-second hard-shell monomer emulsion consisting of 60g of DW, 5g of SDBS, 147g of SM, 30g of BA, 10g of MAA, 2g of ALMA, and 1g of DVB was added over 1 hour after the addition of primary-first middle shell monomer. The result was maintained for 60 minutes to prepare a first middle shell. Pre-emulsion obtained by emulsifying 40g of A.N with a purity of 6.5 wt%, 60g of DW, 5.6g of SDBS, 228g of SM, 3g of EGMAP, and 1g of DVB was added to the primary middle shell heated to 88 °C for 60 minutes, followed by neutralization and synthesis simultaneously. After that, it was maintained at a temperature of 88 °C for 10 minutes. A solution of 1g of KPS dissolved in 30g of DW was added thereto. The result was cooled down to 80 °C and was maintained for 30 minutes to prepare a secondary hard-shell, cooled to 50 ° C or less, filtered with a 400 mesh filter, and packed. The synthesized final emulsion polymer exhibited a solid content of 28.9% in which it was a high-viscosity product that was difficult to stir, and a particle diameter of 868 nm in which non-uniform small particles adhered to the side.

**First Experimental Test**

**Relative Comparison in Unique Particle Opacity Ratio**

A binder paste was prepared by well dispersing 30.0g of deionized water and 0.3g of alkali water-soluble thickener (e.g., HLC HISOL B108), as a thickener, in 12.0 g of acryl emulsion resin (e.g., HLC HISOL AC115) and was added with 10g of emulsion polymer synthesized according to the above embodiments or comparative examples, and the result was well stirred. The stirred composition was drawn on a glass plate using an 8 mil applicator, dried for 3 hours at 25 °C under a 55% moisture condition, and then the opacity ratio was compared. The results are shown in Table 1. The opacity ratio was determined as ◎, ○, △, and × depending on the opacity state of the coat formed on the glass plate.

**[Table 1]**

| | First Embodiment | Second Embodiment | Third Embodiment | First Comparative Example | Second Comparative Example | Third Comparative Example | Fourth Comparative Example | Fifth Comparative Example |
|---|---|---|---|---|---|---|---|---|
| Result of First Experimental Test | | | | | | | | |
| Opacity ratio | △ | ○ | ◎ | ○ | ×× | × | × | × |

◎: Excellent opacity of film
○ : Good opacity of film
△ : Fair opacity of film
×: poor opacity of film
××: clear of film

As can be seen in Table 1, it was confirmed that the hiding rate of Embodiments 1 to 3 was relatively good, and in particular, the hiding rate of Embodiment 3 was excellent. On the other hand, the opacity ratio of Comparative Example 1 was good, but no opacity ratio of Comparative Examples 2 to 5 was measured. It was confirmed that this was because the core particles were destroyed upon neutralization and swelling, or a bad reaction occurred after synthesis due to no addition of crosslinking monomer or inversion between hydrophilic core and hydrophobic shell or residual initiator.

**Measurement of Stain Resistance**

A binder paste was prepared by well dispersing 30.0g of deionized water and 0.3g of alkali water-soluble thickener (e.g., HLC HISOL B108), as a thickener, in 12.0 g of acryl emulsion resin (e.g., HLC HISOL AC115) and was added with 10g of emulsion polymer synthesized according to the above embodiments or comparative examples, and the result was well stirred. The stirred composition was drawn on an opacity chart using an 8 mil applicator, dried for 24 hours at 25° C. and under a 55% moisture condition. Using a Minolta CR-400 spectrophotometer, whiteness (Y0 value from Yxy coordinates according to KS A 0061) was measured at the top, middle, and bottom positions of the opacity chart, and then the average whiteness was calculated. Thereafter, to show the various stains, lipstick, highlighter, and coffee were applied on the dried opacity chart and dried for 15 minutes. Then, the stain was wiped with a wet tissue and dried. Thereafter, the whiteness (Y1) was measured again using a Minolta C-400 spectrophotometer. The stain resistance (Z) was calculated by dividing the whiteness after stain removal by the original whiteness.

$$\text{Stain Resistance (Z)} = Y1 / Y0 \times 100$$

Each stain resistance is shown in Table 2 below.

**[Table 2]**

| | | First Embodiment | Second Embodiment | Third Embodiment | First Comparative Example | Second Comparative Example | Third Comparative Example | Fourth Comparative Example | Fifth Comparative Example |
|---|---|---|---|---|---|---|---|---|
| Result of Second Experimental Test | | | | | | | | | |
| Whiteness | Y0 | 83.52 | 84.46 | 85.75 | 84.49 | 60.74 | 76.87 | 80.15 | 61.45 |
| Stain Resistance (Z) | Lipstick | 97.92% | 97.81% | 98.22% | 90.53% | 98.09% | 93.29% | 90.17% | 92.89% |
| | Highlighter | 96.44% | 97.23% | 97.46% | 89.50% | 96.68% | 89.53% | 86.39% | 92.69% |
| | Coffee | 98.15% | 98.35% | 98.15% | 91.76% | 98.13% | 88.14% | 88.67% | 90.94% |

As shown in Table 2, it was confirmed that the whiteness and stain resistance of Examples 1 to 3 were excellent. On the other hand, Comparative Example 1 had excellent whiteness but poor stain resistance, Comparative Examples 2 and 5 had poor whiteness, and Comparative Examples 3 to 5 had poor stain resistance.

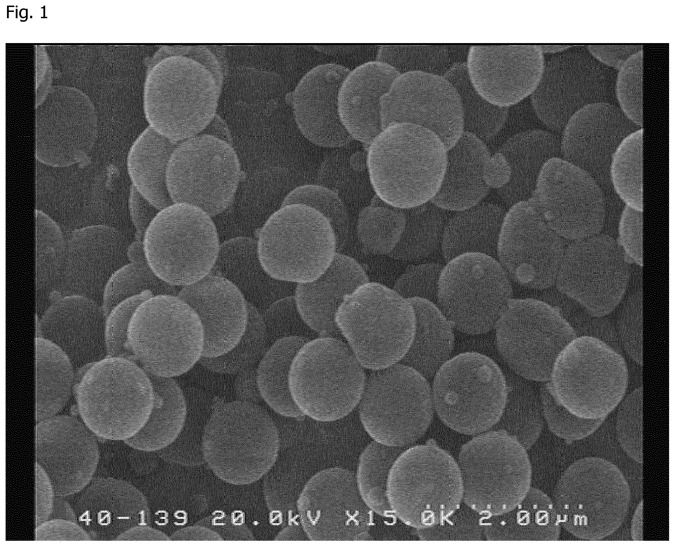

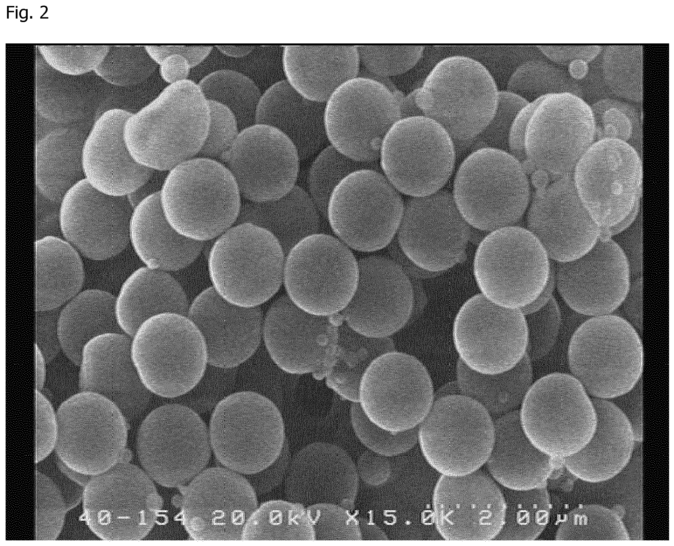

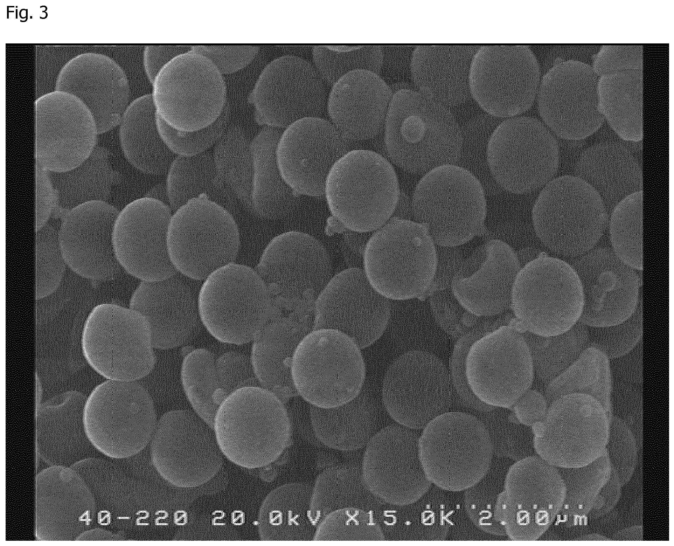

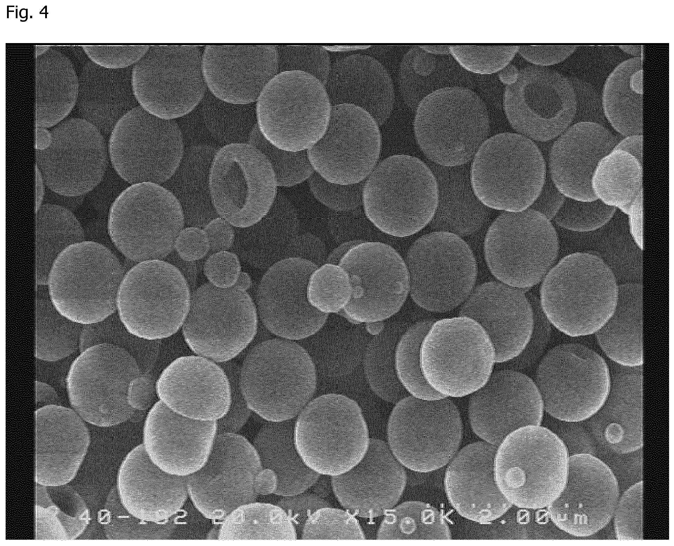

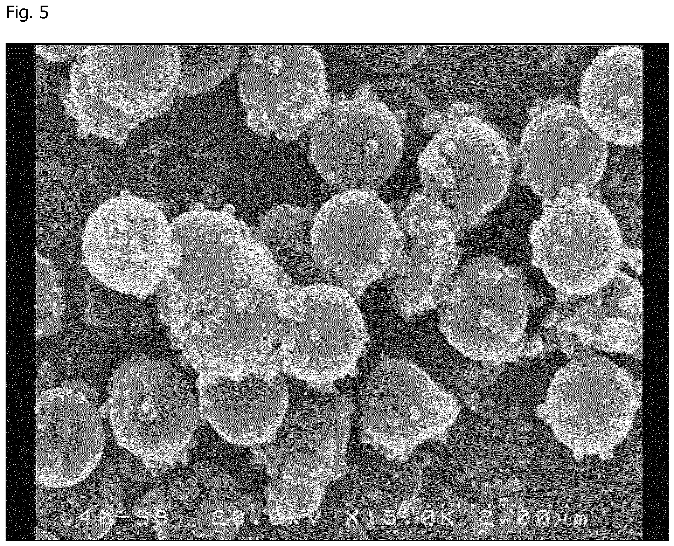

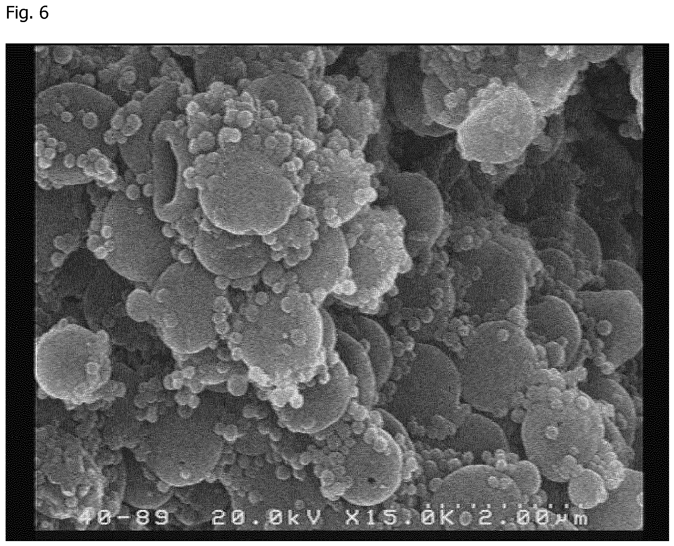

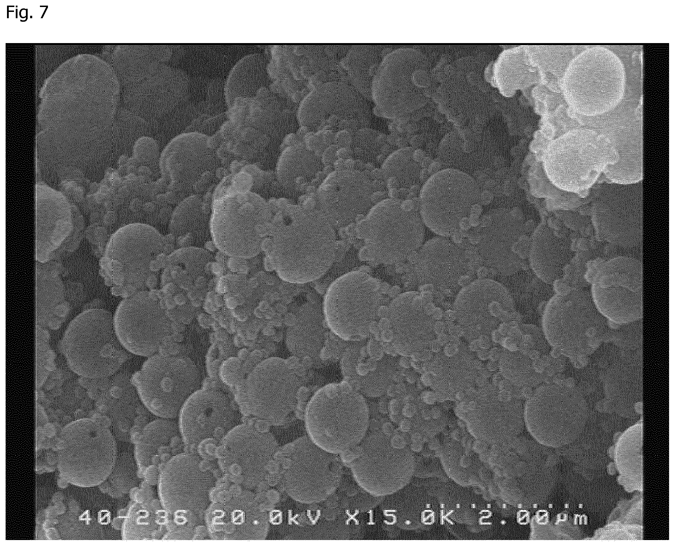

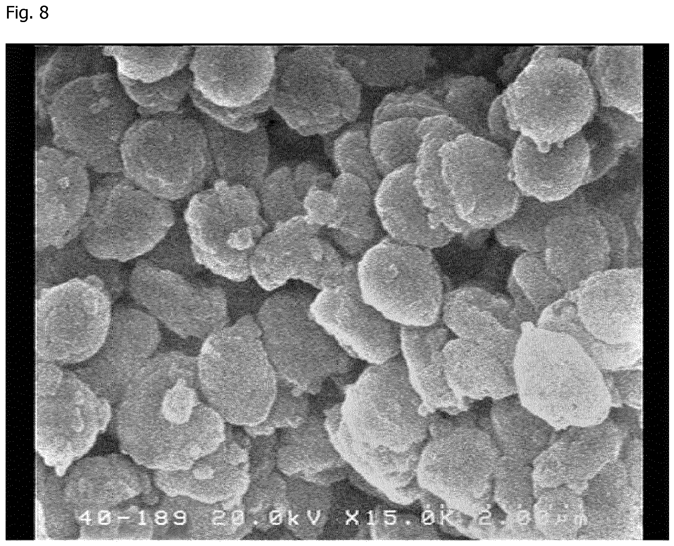

The respective FE-SEM image of Embodiments and Comparative Examples are shown in FIGS. 1, 2, 3, 4, 5, 6, 7, and 8. FIGS. 1, 2, 3, 4, 5, 6, 7, and 8, respectively, are FE-SEM images for the first embodiment, the second embodiment, and the third embodiment, Comparative Example 1, Comparative Example 2, Comparative Example 3, Comparative Example 4, and Comparative Example 5.

As can be seen in FIGS. 1, 2, 3, 4, 5, 6, 7, and 8, Examples 1 to 3 of the present disclosure and Comparative Example 1 form optimal hollow particles with minimized reversion between hydrophilic core and hydrophobic shell and generation of defective particles. However, in Comparative Examples 2 to 5, many defective particles were generated.

Therefore, as in the purpose of the present disclosure, a crosslinking monomer is added during the polymerization of the primary middle shell, and a functional phosphoric acid-based monomer is added to the polymerization reaction that proceeds one step further after the initiator, thereby neutralizing the hydrophilic core without destroying the swellable core and polymerizing the hydrophobic shell simultaneously to synthesize products with improved stain resistance than existing products.

Various changes in form or detail may be made to the present disclosure by one of ordinary skill in the art without departing from the scope of the present disclosure, and the present disclosure is not limited to the above-described embodiments and the accompanying drawings.

## Claims

1. A method for preparing fine particles having enclosed voids with improved stain resistance containing functional phosphoric acid monomer, wherein the method is a multi-staged emulsion polymerization method for preparing fine particles having enclosed voids using a core polymer containing carboxylic acid, a polymerization initiator, a primary middle shell monomer, and a secondary hard-shell monomer,

   wherein the primary middle shell monomer includes a multifunctional monomer that is a crosslinking monomer having two or more double bonds, and
   wherein during the process of forming the secondary hard-shell, a functional monoethylenically unsaturated monomer having a phosphoric acid group and a secondary hard-shell monomer are added to the fine particles, followed by polymerization to remove residual polymerization initiators.

2. The method of claim 1, comprising:

   (a) preparing a primary middle shell polymer by adding a polymerization initiator and a primary middle shell monomer to a core polymer containing the carboxylic acid, followed by polymerization to encapsulate the core;
   (b) preparing fine particles having enclosed voids while neutralizing and swelling the encapsulated core by adding a secondary hard-shell monomer and a neutralizing swelling agent to the primary middle shell polymer, followed by polymerization, and
   (c) removing a residual polymerization initiator by further adding functional monoethylenically unsaturated monomer having a phosphoric acid group and a secondary hard-shell monomer to the fine particles, followed by polymerization.

3. The method of claim 2, wherein the primary middle shell monomer includes a non-ionic monoethylenically unsaturated monomer, a monoethylenically unsaturated monomer having 1 to 2 carboxyl groups, and a multifunctional monomer that is a crosslinking monomer having two or more double bonds.

4. The method of claim 3, wherein in step (a), the primary middle shell polymer is prepared step by step through the first polymerization and the second polymerization, and
   wherein the primary middle shell monomer introduced during the first polymerization has a higher content of monoethylenically unsaturated monomers having 1 to 2 carboxyl groups and a lower content of non-ionic monoethylenically unsaturated monomer than the primary middle shell monomer introduced during the second polymerization.

5. The method of claim 3 or 4, wherein the non-ionic monoethylenically unsaturated monomer includes at least one selected from the group consisting of styrene, a-methyl styrene, p-methyl styrene, t-butyl styrene, vinyl toluene, ethylene, vinyl acetate, vinyl chloride, vinylidene chloride, (meth)acrylonitrile, (meth)acrylamide, (C1-C20) alkyl or (C3-C20) alkenyl esters of (meth)acrylic acid, methyl(meth)acrylate, ethyl (meth)acrylate, butyl(meth)acrylate, 2-ethylhexyl(meth)acrylate, hydroxyl ethyl (meth)acrylate, hydroxypropyl(meth)acrylate, benzyl (meth)acrylate, lauryl(meth)acrylate, oleyl(meth)acrylate, palmityl(meth)acrylate, and stearyl(meth)acrylate.

6. The method of any one of claims 3 to 5, wherein the monoethylenically unsaturated monomer having 1 to 2 carboxyl groups includes at least one selected from the group consisting of acrylic acid, methacrylic acid, acryloxy propionic acid, (meth)acryloxy propionic acid, itaconic acid, aconitic acid, maleic acid or anhydride, fumaric acid, crotonic acid, monomethyl maleate, monomethyl fumarate, and mono methyl itaconate.

7. The method of any one of claims 3 to 6, wherein the multifunctional monomer that is a crosslinking monomer having two or more double bonds includes at least one selected from the group consisting of Ikylene glycol diacrylates and dimethacrylates, ethylene glycol diacrylate, ethylene glycol dimethacrylate, 1,3-butylene glycol diacrylate, 1,4-butylene glycol diacrylate, propylene glycol diacrylate, triethylene glycol dimethyl acrylate, 1,3-glycerol dimethacrylate, 1,1,1-trimethylol propane dimethacrylate, 1,1,1-trimethylol ethane diacrylate, pentaerythritol trimethacrylate, 1,2,6-hexane triacrylate, sorbitol pentamethacrylate, methylene bis-acrylamide, methylene bis-methacrylamide, divinyl benzene, vinyl methacrylate, vinyl crotonate, vinyl acrylate, vinyl acetylene, trivinylbenzene, triallyl cyanurate, divinyl acetylene, divinyl ethane, divinyl disulfide, divinyl ether, divinyl sulfone, diallyl cyanamide, ethylene glycol divinyl ether, diallyl phthalate, divinyl dimethyl silane, glycerol trivinyl ether, divinyl adipate, dicyclopentenyl(meth)acrylates, dicyclopentenyloxy(meth)acrylates, unsaturated esters of glycol monodicyclopentenylethers, allyl esters of fatty acids, 3-unsaturated mono- and dicarboxylic acids having terminal ethylenic unsaturation including allyl methacrylate, allyl acrylate, diallyl maleate, diallyl fumarate, and diallyl itaconate.

8. The method of any one of claims 2 to 7, wherein the neutralizing swelling agent includes at least one selected from the group consisting of a volatile base, a volatile lower amino amine, and a non-volatile base,

   wherein the volatile base includes at least one selected from the group consisting of ammonia and ammonium hydroxide,
   wherein the volatile lower amino amine includes at least one selected from the group consisting of morpholine, trimethylamine, and trimethylamine, 2-amino-2-methyl-1-propanol, and
   wherein the non-volatile base includes at least one selected from the group consisting of potassium hydroxide, lithium hydroxide, zinc ammonium complex, copper ammonium complex, silver ammonium complex, strontium hydroxide, and barium hydroxide.

9. The method of any one of claims 1 to 8, wherein the functional monoethylenically unsaturated monomer having a phosphoric acid group includes at least one selected from the group consisting of vinylphosphonic acid, dimethyl vinylphosphonate, diethyl vinylphosphonate, diethyl allylphosphonate, dimethyl allylphosphonate, ethylene glycol methacrylate phosphate, phosphoric acid 2-hydroxyethyl methacrylate ester, bis[2-(methacryloyloxy)ethyl phosphate, 11-phosphonoundecyl acrylate, and 12-mercaptododecylphosphonic acid.

10. The method of any one of claims 2 to 9, wherein the primary middle shell polymer is more hydrophobic than the core polymer containing the carboxylic acid and more hydrophilic than the secondary hard-shell polymer.

11. A composition comprising fine particles having enclosed voids with improved stain resistance containing the functional phosphoric acid monomer prepared by the method of any one of claims 1 to 10.

12. The composition of claim 11, wherein the composition is for water-based paints, inks, leathers, textiles, flexographic printing or paper coating.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

**Application Number**

EP 23 17 1773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/028511 A1 (ARKEMA INC [US]) 25 February 2016 (2016-02-25) * paragraphs [0015], [0016], [0025], [0028]; claims * | 1-12 | INV.<br>C08F2/22<br>C08F265/04<br>C08F285/00 |
| X | WO 2019/164786 A1 (ARKEMA INC [US]) 29 August 2019 (2019-08-29) * page 8, line 7 - line 28 * * page 10, line 23 - page 11, line 6 * * page 14, line 7 - line 14 * * page 16, line 13 - page 17, line 3; claims * | 1-12 | |
| A | EP 3 348 584 A1 (ZEON CORP [JP]) 18 July 2018 (2018-07-18) * the whole document * | 1-12 | |
| A | EP 3 031 837 A1 (DOW GLOBAL TECHNOLOGIES LLC [US]; ROHM & HAAS [US]) 15 June 2016 (2016-06-15) * the whole document * | 1-12 | TECHNICAL FIELDS SEARCHED (IPC)<br><br>C08F |

The present search report has been drawn up for all claims

| Place of search | Date of completion of the search | Examiner |
|---|---|---|
| Munich | 29 September 2023 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 1773

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2023

| Patent document cited in search report | | Publication date | Patent family member(s) | | Publication date |
|---|---|---|---|---|---|
| WO 2016028511 | A1 | 25-02-2016 | BR | 112017003443 A2 | 28-11-2017 |
| | | | CA | 2958240 A1 | 25-02-2016 |
| | | | CN | 106794655 A | 31-05-2017 |
| | | | CN | 110317306 A | 11-10-2019 |
| | | | EP | 3194156 A1 | 26-07-2017 |
| | | | MY | 177505 A | 17-09-2020 |
| | | | US | 2017240716 A1 | 24-08-2017 |
| | | | US | 2019292346 A1 | 26-09-2019 |
| | | | WO | 2016028511 A1 | 25-02-2016 |
| WO 2019164786 | A1 | 29-08-2019 | CA | 3091788 A1 | 29-08-2019 |
| | | | CN | 111741808 A | 02-10-2020 |
| | | | EP | 3755458 A1 | 30-12-2020 |
| | | | US | 2021009816 A1 | 14-01-2021 |
| | | | WO | 2019164786 A1 | 29-08-2019 |
| EP 3348584 | A1 | 18-07-2018 | CN | 107922521 A | 17-04-2018 |
| | | | EP | 3348584 A1 | 18-07-2018 |
| | | | JP | 6801663 B2 | 16-12-2020 |
| | | | JP | WO2017043281 A1 | 21-06-2018 |
| | | | KR | 20180050649 A | 15-05-2018 |
| | | | US | 2018237548 A1 | 23-08-2018 |
| | | | WO | 2017043281 A1 | 16-03-2017 |
| EP 3031837 | A1 | 15-06-2016 | AU | 2015258255 A1 | 16-06-2016 |
| | | | BR | 102015029008 A2 | 27-09-2016 |
| | | | CA | 2912294 A1 | 01-06-2016 |
| | | | CN | 105646759 A | 08-06-2016 |
| | | | EP | 3031837 A1 | 15-06-2016 |
| | | | KR | 20160065744 A | 09-06-2016 |
| | | | US | 2016152854 A1 | 02-06-2016 |

EPO FORM P0459

For more details about this annex : see Official Journal of the European Patent Office, No. 12/82

**REFERENCES CITED IN THE DESCRIPTION**

**Patent documents cited in the description**

- US 10030080 B2